# EUROPEAN PATENT SPECIFICATION

(11) **EP 4 683 770 B1**
(45) Date of publication and mention of the grant of the patent: **28.10.2026**
(21) Application number: 24732966.7
(22) Date of filing: 13.06.2024
(51) Int. Cl.: B23K 26/06, B23K 26/082, B23K 26/38, G02B 26/08, G02B 19/00

(54) **LASER MACHINING DEVICE AND LASER MACHINING METHOD FOR PROCESSING A WORKPIECE**
LASERBEARBEITUNGSVORRICHTUNG UND LASERBEARBEITUNGSVERFAHREN ZUR BEARBEITUNG EINES WERKSTÜCKS
DISPOSITIF ET PROCÉDÉ D'USINAGE LASER POUR L'USINAGE D'UNE PIÈCE

(30) Priority: 15.06.2023 EP 23179443
(43) Date of publication of application: 28.01.2026
(73) Proprietor: Bystronic Laser AG, 3362 Niederönz (CH)
(72) Inventor: MUMENTHALER, Martin, 4938 Rohrbach (CH); LUEDI, Andreas, 3400 Burgdorf (CH)
(74) Representative: Patentanwälte Geyer, Fehners & Partner mbB
(86) International application number: PCT/EP2024/066390
(87) International publication number: WO 2024/256550

(56) References cited:
- EP-A1- 4 144 474
- CN-A- 106 735 886
- CN-U- 204 934 881
- DE-A1- 102007 028 504

## Description

The invention relates to a laser machining device for the laser machining of a workpiece, a laser machining method for the laser machining of a workpiece using such laser machining device, according to the preamble of claims 1 and 10 (see for example EP 4 144 474 A1).

Lasers, in particular solid-state lasers such as fibre lasers or disk lasers are increasingly being used to machine metallic materials. Laser sources with powers of up to 50 kW and above are used. Primary laser machining of metal materials includes cutting, welding, hardening and additive manufacturing. For material machining, the laser radiation is guided to the machining location, also called the process zone, on the workpiece and shaped for machining. In some laser machining devices, the laser radiation is guided into a machining head of the laser machining device via a transport fibre. The machining head is guided over the workpiece during machining and typically undergoes large accelerations. A compact design of the machining head is therefore desirable. In particular, in the direction of irradiation of the machining laser beam onto the workpiece, the space available can be limited, for example by the height of the machine or a machining cell.

The machining head is typically located near the hot process zone during machining of the workpiece and is also constantly exposed to potential contamination from tiny dirt particles resulting from the machining. On the other hand, the laser beam is shaped in the machining head for the intended machining. This can typically be accomplished in a free beam, i.e. a beam propagating in a gaseous environment or in a vacuum. A laser beam in a free beam with the lenses usually used to shape the beam is particularly sensitive to contamination. Even the slightest contamination on a lens surface can lead to the failure of a machining head due to the high laser powers used. Contamination can come not only from the outside but also from inside the machining head. If lenses or other optical elements are adjusted for focal position adjustment or a changed magnification, contaminant abrasion can occur due to the mechanical movement.

In the present case, the term "magnification" means the optical magnification ratio between the laser beam that leaves the machining head and the laser beam that enters the machining head. If the laser beam is guided from the laser source to the machining head in an optical waveguide, e.g. in a transport fibre, the diameter of the laser beam when it enters the machining head is equal to the diameter of the light guide. In this case, the magnification of the machining head, i.e. the magnification of the optical system of the machining head, describes the magnification ratio of the diameter of the laser beam at the outlet opening of the machining head to the diameter of the optical waveguide.

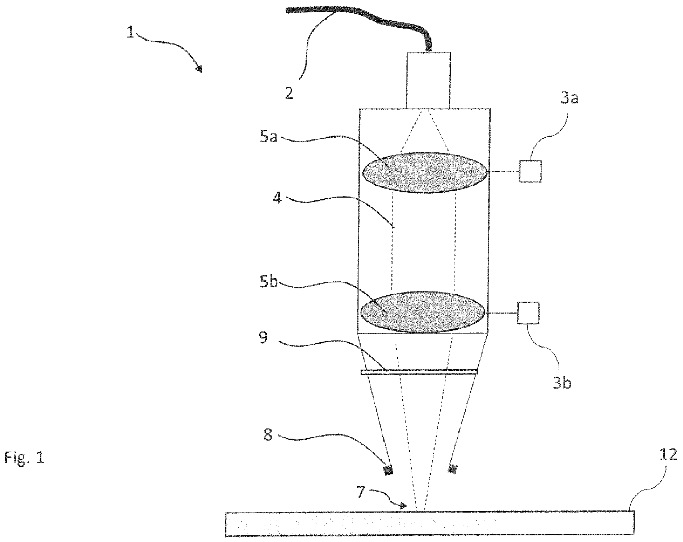

A typical laser machining head 1 is shown schematically in figure 1, with a transport fibre 2, displaceable lenses 5a, 5b, lens displacement mechanisms 3a, 3b, a laser beam 4, which is provided as a free beam, the workpiece 12 to be machined, the outlet opening 8 and the machining location 7. In some examples, the interior of the machining head 1 is shielded with an optional replaceable protective glass 9. The protective glass protects the sensitive optical unit of the machining head from contamination. The basic structure shown in figure 1 corresponds to a typical and widely used machining head. The basic magnification setting is configured with the focal length ratio of the focusing lens 5b to the collimating lens 5a. The ratio of the focal lengths of the focusing lens 5b and the collimating lens 5a can be in the range of 2 to 3.4, for example. By displacing the lenses 5a, 5b parallel to the direction of propagation of the laser beam 4, the magnification and/or the focal position of the laser beam can be changed relative to the outlet opening 8. Machining heads can comprise more than two lenses. In the case of machining heads with which both the magnification and the focal position can be changed, at least two lenses are typically designed to be displaceable. It should be mentioned that not all machining heads are designed with an option for adjusting the magnification. On the other hand, a possibility for adjusting the focal position is typically provided in machining heads. This is because the position of the focus at the machining location 7 can influence or determine the process quality. Depending on process parameters, such as the thickness or material of the workpiece or the composition of the process gas, other focal positions are used.

A machining head as shown in figure 1 is disadvantageous in several respects. On the one hand, mechanical abrasion is generated by moving or displacing optical elements, such as the lenses 5a and 5b. The abrasion can contaminate the optical surfaces. Furthermore, transmissive optical elements, such as the lenses 5a and 5b, are particularly sensitive to contamination. This is because contaminated areas on transmissive surfaces are locally very strongly heated due to the radiation-absorbing contamination. This causes the refractive index to change significantly in this area and creates a large refractive index gradient with respect to the surroundings. This locally strongly changed light refraction can usually affect the laser beam shaping to such an extent that the machining head can become unusable. Transmissive optical elements, in particular the often-used quartz optical units, are difficult to cool and have low thermal conductivity, which is why contamination heats up very strongly locally and scorching can occur in optical elements.

Therefore, attempts have been made to develop machining heads without displaceable lenses. LaserMech has developed the FibreCut HR machining head, in which no transmissive optical elements have to be moved to adjust the focal position; cf. FibreCUT^{®} HR - Laser Mechanisms, Inc. The laser beam is directed via rigid, curved, water-cooled metallic mirrors. The focal position of this head is adjusted by changing the distance between the outlet opening and the protective glass of the machining head. A further example of a machining head without moving transmissive optical elements is the FC4 laser cutting head from LT Ultra; cf. 2D (solid state) - LT Ultra Precision Technology GmbH (It-ultra.com). This cutting head uses a mirror with variable mirror curvature. However, the examples listed can only adjust the focal position of the machining laser beam. Further examples in which transmissive optical units are preferably dispensed with are known from EP3747588 A1 and EP3980216 A1, which disclose reflective optical units in a cutting head. EP4144474 A1 relates to a method for dynamically adjusting a focus diameter of a laser beam emitted from a laser processing head of a laser cutting machine, an adjustment module, a computer program and a system.

The object is to provide a laser machining device and a laser machining method which enable a modification of a focal position of the machining laser beam and a modification of a magnification of the optical system while avoiding contamination.

This object is achieved by a laser machining device for the laser machining of a workpiece according to claim 1, a laser machining method for the laser machining of a workpiece according to claim 10.

One embodiment relates to a laser machining device as defined in claim 1, for the laser machining of a workpiece, ir particular for laser cutting, comprising a laser machining head with a housing that has an interface for coupling a laser source for a machining laser beam and an outlet opening for the machining laser beam; and an optical system for shaping the machining laser beam and guiding the machining laser beam on an optical path having a total length between the interface and the outlet opening; wherein the housing encloses the optical system and has a spatial extension parallel to a central axis of the outlet opening; the optical system has a first stationary, deformable mirror and a second stationary, deformable mirror, each of which is arranged and/or designed such that they each deflect the machining laser beam at an angle; and the ratio of the overall length of the optical path between the outlet opening and the interface for coupling the laser source to the spatial extension of the housing parallel to the central axis of the outlet opening is in the range of 2 to 4.5, preferably 3 to 4.

Surprisingly, the above embodiment makes it possible to modify both the focal position of the machining laser beam and the magnification of the optical system while avoiding contamination of the machining head, in particular the optical system. The modification of both the focal position of the machining laser beam and of the magnification of the optical system is carried out by means of the first and second stationary, deformable mirrors without displacing optical elements and thus avoiding the resulting abrasion. At the same time, the machining laser beam can be flexibly shaped by the first and second stationary, deformable mirrors. A relatively long optical path between the interface for coupling the laser source and the outlet opening of the machining head is compensated for by beam folding at the first and second deformable mirrors. Thus, the spatial extension of the optical path of the machining laser beam parallel to the central axis of the outlet opening can be small due to changes in the propagation direction of the machining laser beam. This results in a compact machining head which has a small spatial extension, in particular parallel to the central axis of the outlet opening. In some variations of the embodiment, the ratio of the overall length of the optical path to the spatial extension of the housing parallel to the central axis of the outlet opening can be more than 2, preferably in the range of 2.1 to 10.

In all embodiments, the first deformable mirror and/or the second deformable mirror may in each case be a mirror with an adjustable radius of curvature, also called a mirror with a variable radius of curvature or VRM. At least one mirror selected from the first deformable mirror, the second deformable mirror and at least one further deformable mirror and/or their respective radius of curvature can be dynamically deformable or adjustable at frequencies in the range of 20 to 100 Hz. The at least one mirror, in particular the first deformable mirror and/or the second deformable mirror, can each be deformable or adjustable within a few milliseconds, for example within 1 ms to 200 ms, preferably within 1 ms to 50 ms. A radius of curvature of the at least one mirror can be in the range of -1.5 m to +1.5 m, preferably -2.8 m to +2.8 m, more preferably -3 m to +3 m. For example, a full stroke from a -3 m radius of curvature to a +3 m radius of curvature or vice versa can be accomplished in approximately 20 ms. With the deformable mirrors, in particular with the mirrors with a variable radius of curvature, a low-aberration deflection of the machining laser beam can be achieved.

In all embodiments, the overall length of the optical path can be in the range of 1000 mm to 2500 mm, preferably 1400 mm to 1900 mm. The spatial extension of the housing parallel to the central axis of the outlet opening can be in the range of 300 mm to 700 mm, preferably 400 mm to 600 mm. The portion of the optical path between the first and second deformable mirrors may have a length of at least 300 mm, preferably in the range of 700 to 1100 mm. In variations of embodiments, the portion of the optical path, in particular the minimum portion of the optical path, between the first deformable mirror, the second deformable mirror and/or a further stationary, deformable mirror can be between 280 mm and 350 mm, preferably between 150 mm and 450 mm.

In all embodiments, a radius of curvature of the first mirror and/or a radius of curvature of the second mirror can be in the range of -1.5 m to +1.5 m, preferably -2.8 m to +2.8 m, more preferably -3 m to +3 m. This is particularly advantageous if the first and/or the second mirror is/are each designed as a VRM, i.e. as a mirror with a variable radius of curvature, due to the mechanical properties of the VRMs, in particular elastic modulus and material fatigue. Furthermore, the angle at which the first and/or the second mirror deflect(s) the machining laser beam can be an angle less than 90°. The angle can be an acute angle in the range of 5.5° to 12.5°, preferably 7.5° to 10.5°. This enables low-aberration deflection. With an acute deflection angle, the mirror surface, when deformed, can be deformed almost spherically without introducing large, undesirable astigmatisms and/or aberrations into the machining laser beam.

The ratio of the spatial extension of the housing parallel to the central axis of the outlet opening to the length of the portion of the optical path between the first and the second deformable mirror can be in the range of 0.33 to 0.9, preferably 0.4 to 0.7.

The first and second deformable mirrors, in particular actuators of the first and second deformable mirror, can be designed to be controllable individually and/or in a manner coordinated with one another in order to adjust the radius of curvature. A control unit for controlling the first mirror and second mirror, in particular for controlling the actuators of the first and second mirrors, can be provided in the laser machining device. A memory apparatus, in particular a memory apparatus for program modules of a computer program product, can be provided in the laser machining device and/or in the control unit.

The first and/or the second deformable mirror may be deformable such that at least one element selected from the divergence of the machining laser beam and the diameter of the machining laser beam is changed. The housing can only comprise the optical system. The first and second mirrors can further be designed to at least partially reflect and/or at least partially deflect the machining laser beam.

At least one element selected from the optical system and the control unit can be designed such that by adjusting at least one of the radii of curvature of the first and second deformable mirrors, in particular exclusively by adjusting at least one of the radii of curvature of the first and second deformable mirrors, a focal position of the machining laser beam and a magnification of the optical system are modified. Furthermore, at least one element selected from the optical system and the control unit can be designed such that a change in the curvature of the first and/or the second mirror takes place at at least 2.3 (m s)⁻¹. The curvature is defined in some embodiments as the inverse of the radius of curvature, i.e. as 1/radius of curvature. For example, a full stroke can occur from a curvature of -0.3 m⁻¹ up to a curvature of +0.3 m⁻¹ in less than 250 ms. This results in a change in curvature of 2.4 (m s)⁻¹.

At least one element selected from the optical system and the control unit can be designed such that the focal position of the machining laser beam at the machining location is adjustable in a range of -90 mm to +110 mm, preferably -40 mm to +40 mm, and/or the magnification of the optical system is adjustable in a range of 1.4 to 4.8, preferably 1.7 to 3.8.

The optical system can only contain optical elements that are each stationary, in particular in the propagation direction of the machining laser beam. The optical system may contain one or more further optical elements selected from a mirror, an adaptive mirror, a deflection mirror, a lens and a fibre end cap, each of which is stationary. At least one optical element selected from at least one stationary planar mirror, at least one stationary adaptive mirror and at least one further stationary, deformable mirror can be provided between the first mirror and the second mirror. The portion of the optical path between the at least one further stationary, deformable mirror and at least one adjacently arranged mirror selected from the first stationary deformable mirror, the second stationary deformable mirror and another of the further stationary deformable mirrors can have a length in the range of 150 mm up to 450 mm, preferably 280 mm to 350 mm, in each case. By providing at least one stationary optical element between the first and the second mirror, the optical path between the first and the second mirror can be divided into optical sub-paths. The spatial extension of the optical path of the machining laser beam parallel to the central axis of the outlet opening can be minimized in this way by additional repeated changes in the propagation direction of the machining laser beam, i.e. by additional beam folding. As a result, despite the large length of the optical path, a reduced overall height of the machining head can be achieved, in particular a reduced spatial extension of the housing parallel and/or perpendicular to the central axis of the outlet opening.

In some variations, a laser source for the machining laser beam can be coupled to the interface. Furthermore, the housing can have further interfaces for coupling further components, in particular a camera for process monitoring and/or a light source for an illuminating light.

A further embodiment relates to a laser machining method as defined in claim 10, for the laser machining of a workpiece, in particular for laser cutting, with a laser machining device according to the preceding embodiment or variations thereof, comprising the steps: generating a machining laser beam with a laser source coupled to the interface of the housing of the laser machining head; shaping the machining laser beam and guiding the machining laser beam with the optical system on the optical path with an overall length between the interface and the outlet opening of the laser machining head; adjusting at least one of the radii of curvature of the first stationary, deformable mirror and the second stationary, deformable mirror; deflecting the machining laser beam at an angle at each of the first deformable mirror and the second deformable mirror; and machining the workpiece with the machining laser beam.

In the method, the ratio of the overall length of the optical path to the spatial extension of the housing parallel to the central axis of the outlet opening can be in the range of 2 to 4.5, preferably 2.5 to 4. The portion of the optical path between the first and second deformable mirrors may have a length of at least 300 mm, preferably in the range of 700 to 1100 mm. An acute angle in the range of 5.5° to 12.5°, preferably 7.5° to 10.5°, can be selected or preconfigured as the angle at which the first and/or the second mirror deflect the machining laser beam.

The first and second mirrors, in particular actuators of the first and second mirrors, can be controlled individually and/or in a manner coordinated with one another, in particular with the control unit, to adjust the radius of curvature. The first and/or the second deformable mirror can be deformed such that at least one element selected from the divergence of the machining laser beam and the diameter of the machining laser beam is changed.

By adjusting at least one of the radii of curvature of the first and second deformable mirrors, in particular exclusively by adjusting at least one of the radii of curvature of the first and second deformable mirrors, a focal position of the machining laser beam and a magnification of the optical system can be modified. Furthermore, a change in the respective curvatures of the first and/or the second mirror can take place at at least 2.3 (m s)⁻¹.

The focal position of the machining laser beam can be adjusted in a range of -90 mm to +110 mm, preferably -40 mm to +40 mm. The magnification of the optical system can be adjusted in a range of 1.4 to 4.8, preferably 1.7 to 3.8. The spatial extension of the optical path of the machining laser beam parallel to the central axis of the outlet opening can be minimized by repeated changes in the propagation direction of the machining laser beam.

The embodiments or variations of the laser machining device can be used in the embodiments or modifications of the method for the laser machining of a workpiece. The workpiece can contain at least one metal, i.e. be metallic, and/or have the form of a metal sheet. With the preceding embodiments of the device for the laser machining of a workpiece, the same advantages and functions can be realized as with the embodiments of the laser machining device, in particular with identical and/or analogous features.

In the following, the invention is explained in more detail on the basis of exemplary embodiments with reference to the accompanying drawings, which likewise disclose features that are essential to the invention. These exemplary embodiments are used for illustration purposes only and are not to be construed as limiting. For example, a description of an exemplary embodiment with a large number of elements or components should not be interpreted to the effect that all of these elements or components are necessary for implementation.

To avoid repetition, elements that are the same or that correspond to one another are denoted by the same reference signs in different figures and are not explained more than once. In the drawings:
- Figure 1: schematically shows a typical laser machining head 1;
- Figures 2a and 2b: schematically show an exemplary deformable mirror in each case;
- Figure 3a: schematically shows a laser machining head 100 as an example;
- Figure 3b: schematically shows a laser machining device 10 as an example;
- Figure 4: schematically shows a laser machining head 200 as an example;
- Figure 5: schematically shows a laser machining head 300 as an example;
- Figure 6: shows a region 116 in which the magnification and the position of the focus can be adjusted with the laser machining head 100; and
- Figure 7: shows regions 116a, 116b, 116c in which the magnification and the position of the focus can be adjusted with a modified laser machining head 100.

In any embodiments, variations thereof or examples, the material of the workpiece may include at least one metal. The workpiece can also be shaped as a metal sheet. The term "coupling a laser source" may include direct coupling of the laser source or coupling of an optical transport fibre and/or a fibre end cap of an optical transport fibre which are connected to the laser source. The laser source can be designed to generate the machining laser beam with a wavelength in the range of 400 nm to 1500 nm and/or with a power of at least 1 kW, preferably 1 to 50 kW. The first stationary, deformable mirror can be referred to synonymously as the first deformable mirror or as the first mirror. The second stationary, deformable mirror can be referred to synonymously as the second deformable mirror or as the second mirror. The term "deformable" can also be synonymously referred to as "adjustable". The term "machining head" is also used synonymously for the term "laser machining head".

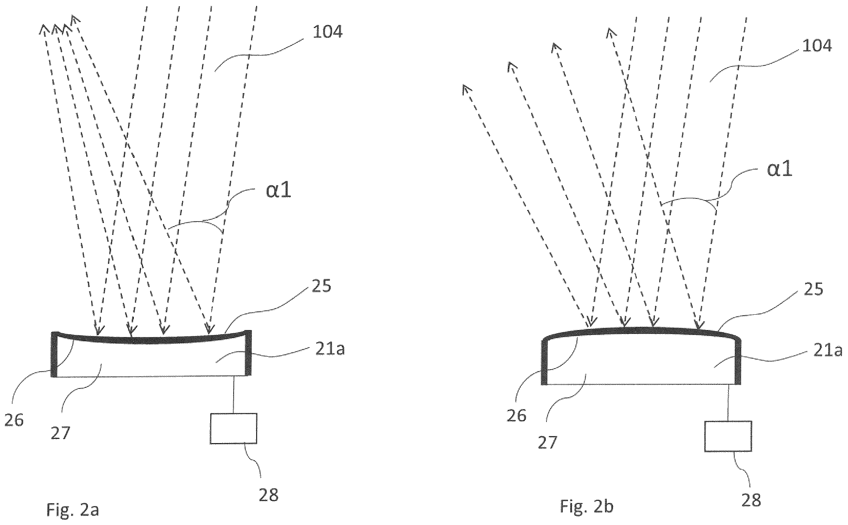

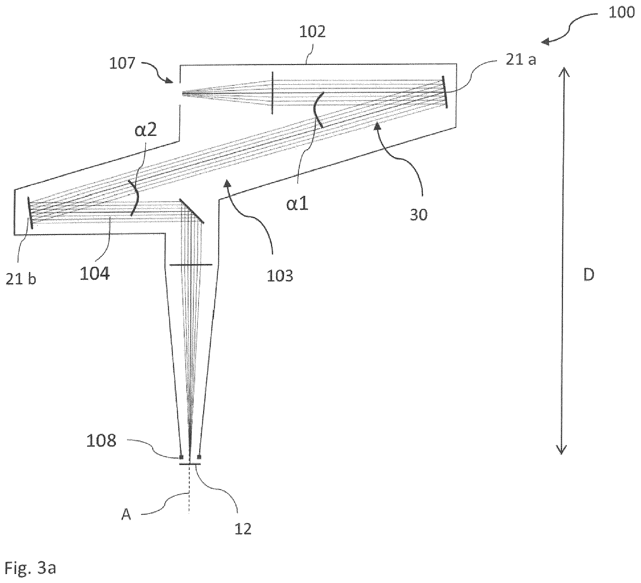

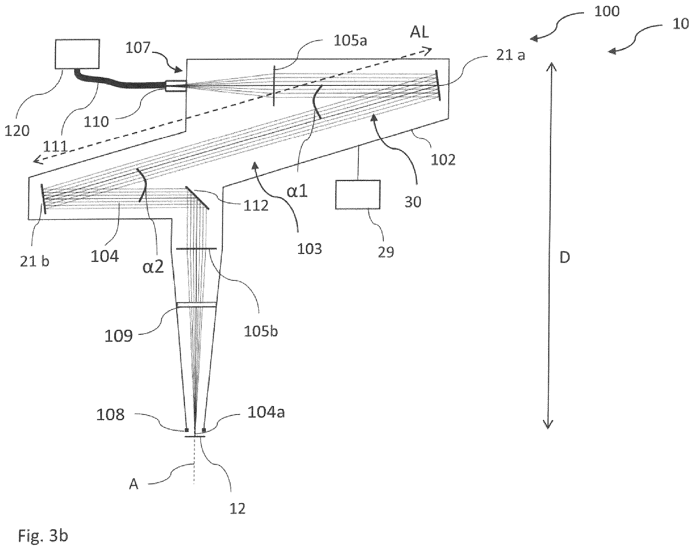

Figures 2a and 2b show schematically, by way of example, a deformable mirror 21a, which can be used as the first stationary, deformable mirror and/or the second stationary, deformable mirror. Figure 3a schematically illustrates a laser machining head 100 as an example, which includes an optical system 103 in which two stationary deformable mirrors 21a and 21b are provided. Figure 3b shows schematically a laser machining device 10 with the machining head 100, as an example. The machining head 100 has a housing 102 in which an interface 107 for coupling a laser source 120 for a machining laser beam 104 and an outlet opening 108 for the machining laser beam 104 are provided. The interface 107 is located in the lateral region at an end of the housing 102 opposite the outlet opening 108.

In the present example, the first and second mirrors 21a, 21b are each designed as a VRM 21a, 21b, i.e. each as a mirror with a variable radius of curvature. Figures 2a and 2b each show the VRM 21a as a schematic representation. The VRM 21b is of the same design. The mirror 21a has a movable surface 25, which is designed as a membrane 26 and which deflects the incident machining laser beam 104. In addition, the mirror 21a can change the beam divergence of the machining laser beam 104.

The curvature of the surface 25 of the VRM 21a is changed, for example, by a liquid or gaseous fluid which is applied to the back of the membrane 26. An actuator 28 is provided for this purpose. The actuator 28 can, for example, be a pump that can be controlled by a control unit 29 of the machining head 100 for regulating the pressure of the fluid in a fluid space 27 of the mirror 21a which adjoins the membrane of the surface 25. Furthermore, a fluid reservoir (not shown) can be connected to the pump. The mirror curvature, i.e. the curvature of the membrane 26 and thus the radius of curvature of the surface 25 can be changed dynamically by means of the actuator 28 with frequencies in the range of 20 to 100 Hz. Figure 2a shows the mirror 21a with a concave curvature of the surface 25, and figure 2b shows the mirror 21a with a convex curvature of the surface 25. The control unit 29 can be a central control unit of the laser machining device 10, which is connected to all controllable components in a data-conducting manner, or can be contained in the central control unit.

In the example of the VRM 21a shown in figures 2a and 2b, the machining laser beam 104 is deflected at the surface 25 with a small angle α1, in particular with an acute angle α1. At the VRM 21b, the machining laser beam 104 is deflected at a small, in particular acute, angle α2. This is advantageously accompanied by the fact that the machining head 100 shown in figure 3a, which can have a long optical path 30 as a beam path due to the limited curvature capability of the VRMs 21a and 21b, can be built compactly. Owing to the small, in particular acute, angles α1 and α2 between the incident and output laser beams, the machining head 100 has a compact design and a low overall height. This means that the machining head 100 has a small spatial extension D, shown in figure 3a with an arrow, parallel to a central axis A of the outlet opening 108, despite a long optical path between the interface 107 and the outlet opening 108. By deforming the surface 25 of the VRMs 21a and 21b, i.e. by changing the radius of curvature of the VRM 21a and/or the VRM 21b, the magnification of the optical system 103 of the machining head 100 can be changed in a range around a basic magnification setting. In this example, the optical imaging is substantially determined by the length of the portion of the optical path 30 between the two VRMs 21a, 21b.

In a variation of the example, as shown in figure 3b, the machining head 100 has transmissive optical elements, namely a fibre end cap 110 of a transport fibre 111, which is connected to the laser source 120 of the laser machining device 10, a collimating lens 105a and a focusing lens 105b, which are each stationary and also immovable. Furthermore, a stationary, immovable deflection mirror 112 and a protective glass 109 are provided. In this variation, the two VRMs 21a and 21b are arranged in the free machining laser beam 104 between the collimating lens 105a and the focusing lens 105b. For the optical imaging of the optical system 103, in this variation of the machining head 100, both the ratio of the lens focal lengths, namely the ratio of the focal length of the focusing lens 105b to the focal length of the collimating lens 105a, as well as the length of the portion of the optical path 30 between the two VRMs 21a and 21b, are determinant. A basic magnification setting is configured with the focal length ratio of the lenses 105a, 105b. A focus 104a of the machining laser beam 104 is shown in figure 3b, by way of example, arranged in the region of the outlet opening 108.

In the example of figures 3a and 3b, the VRMs 21a and 21b can change up to a minimum radius of curvature R of ±3 m A length AL of the portion of the optical path 30 between the first deformable mirror 21a and the second deformable mirror 21b is at least 300 mm, shown in figure 3b with a dashed arrow. By appropriately preconfiguring the length AL in the region of at least 300 mm, the magnification and the position of the focus 104a, for example on the axis A, can be advantageously changed. The position of the focus 104a is also called the focal position. For example, in the case of laser beam cutting, a magnification range of more than approximately 1.7, for example approximately 1.7 to approximately 3.8, and an adjustment range of the focal position of approximately 40 mm is configured.

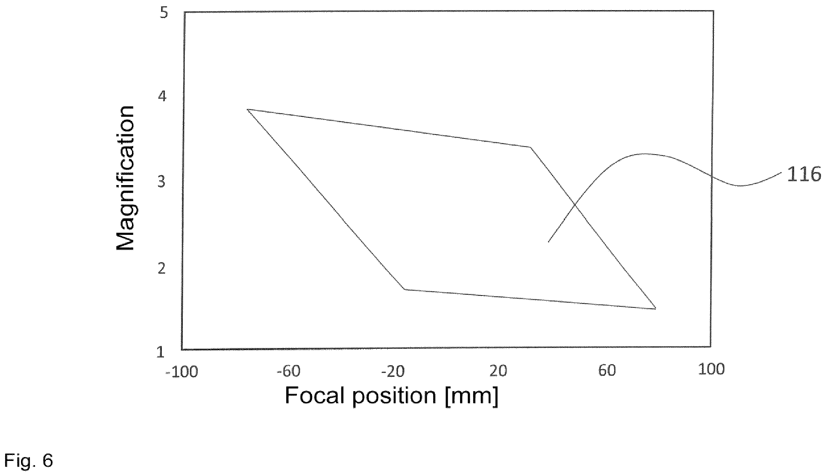

In the examples of figures 3a and 3b, the collimating lens 105a has a focal length of 100 mm and the focusing lens 105b has a focal length of 250 mm, which leads to a basic magnification setting of 2.5. The result of a length AL of 900 mm is an adjustment range of magnification of 1.8 to 3.7 with an average adjustment range of the focal position of -20 mm from the outlet opening 108 upwards to +60 mm from the outlet opening 108 downwards. A region 116 in which the magnification and the position of the focus 104a can be adjusted is shown in figure 6 for the present example. The region 116 is a parameter region. Depending on the magnification setting, slightly different focal positions can be achieved. In the present example, the adjustment range of the focal position is large enough for each magnification between 1.8 and 3.7 so that the thicknesses of a workpiece 12 formed as sheet metal under 200 mm can be easily cut.

The overall length of the optical path 30 from the interface 107 to the outlet opening 108, also called the laser path length, is 1500 mm in the examples in figures 3a and 3b. Despite this considerable overall length, the extension D of the housing 102 of the machining head 100 parallel to the central axis A of the outlet opening 108 is less than 400 mm. The ratio of the laser path length to the extension D is therefore an advantageous 3.75. The angles α1 and α2 are each between 7.5° and 10.5°. The ratio of the extension D to the length AL is approximately 0.44.

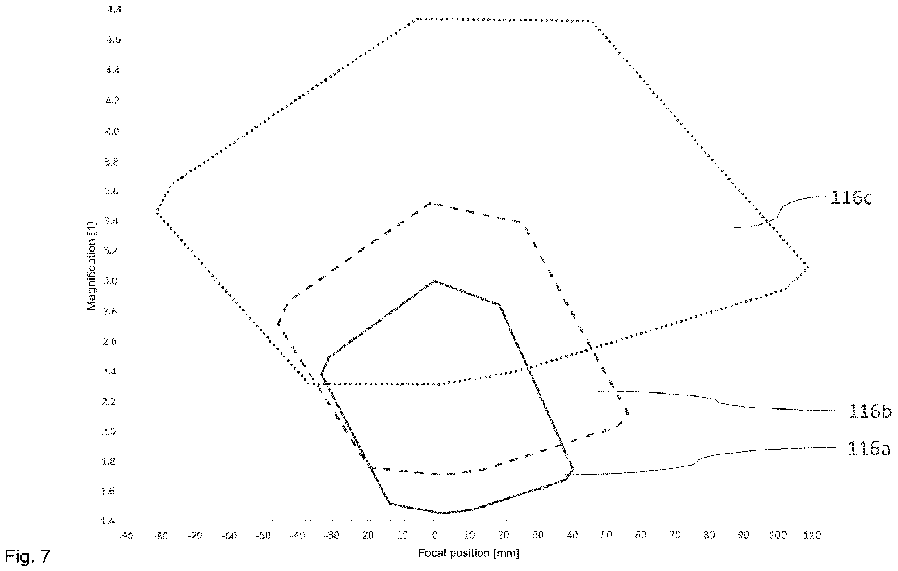

The laser machining head 100 of figures 3a, 3b can optionally be equipped with different pairs of lenses 105a, 105b, i.e. with different basic magnification settings. The parameter region in which the magnification and the position of the focus 104a can be adjusted depends on the lens combination, i.e. on the basic magnification setting. A changed basic magnification setting, i.e. a changed pair of lenses 105a, 105b and therefore a changed ratio of the focal length of the lens 105b to the focal length of the lens 105a, modifies this region. Alternative regions 116a, 116b, 116c in which the magnification and the position of the focus 104a can be adjusted are shown in figure 7. Shown is a region 116a for a basic magnification setting of 1.5 (solid line), a region 116b for a basic magnification setting of 2.6 (dashed line), and a region 116c for a basic magnification setting of 3.6 (dotted line). The larger the basic magnification setting, the larger the region in which the magnification and the position of the focus 104a can be adjusted.

The planar deflection mirror 112 only serves to guide the machining laser beam 104 to the outlet opening 108 and has no influence on the beam shaping of the machining laser beam 104.

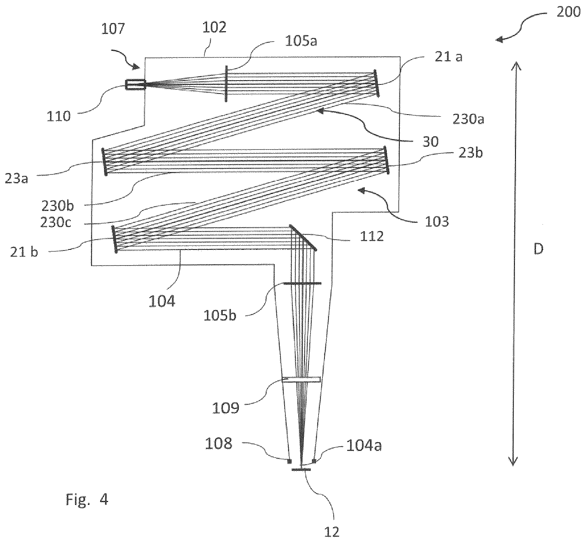

As a further example, a laser machining head 200 is shown in figure 4. In this example, two stationary planar deflection mirrors 23a and 23b arranged one behind the other in the propagation direction of the machining laser beam 104 are provided between the first mirror 21a and the second mirror 21b. As a result, the optical path 30 between the first and second mirrors 21a and 21b is divided into optical sub-paths 230a, 230b, 230c. Dividing the optical path 30 into such sub-paths means that the laser machining head 200 can also be built compactly in an extension perpendicular to the extension D, without having to shorten the part of the optical path 30 that the machining laser beam 104 travels between the VRMs 21a and 21b. The planar deflection mirrors 23a and 23b only change the propagation direction of the machining laser beam 104. The beam profile, the beam shape and the beam divergence of the machining laser beam 104 remain unchanged when reflected on the deflection mirrors 23a and 23b. Even with the design of the laser machining head 200, the extension D is less than 500 mm. The ratio of the laser path length to the extension D is therefore approximately 3. Furthermore, the ratio of the extension D to the length AL is 0.55.

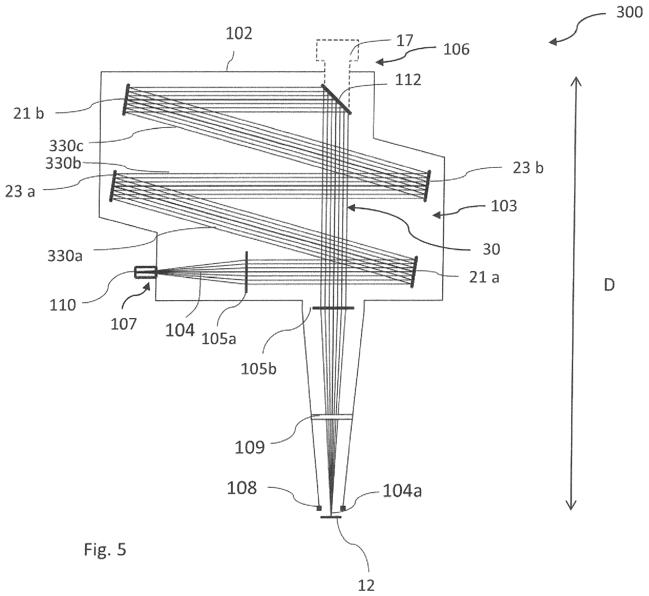

A laser machining head 300 is shown in figure 5 as a further example. In contrast to the examples described above, the interface 107 is located in a lateral region of the housing 102 adjacent to the outlet opening 108. In this example, the optical path 30 between the first mirror 21a and the second mirror 21b is divided into optical sub-paths 330a, 330b and 330c. This is done by arranging the two flat deflection mirrors 23a and 23b one behind the other in the optical path 30 between the VRMs 21a and 21b. This also results in a compact design of the machining head 300. It is notable here that portions of the optical path 30 of the machining laser beam 104 intersect. The advantage of this example is that the planar mirror 112, which can be transparent to observation light, is easily accessible for process monitoring. An optional process monitoring unit 17, shown in dashed lines in figure 5, can, for example, consist of a camera and/or a photodiode and be provided at a further interface 106 of the housing 102. The optical path 30 between the interface 107 and the outlet opening 108 is 1700 mm in this example. Even with this design of the machining head 300, the extension D of the housing 102, i.e. without the process monitoring unit 17, is less than 500 mm. The ratio of the overall length to the extension D parallel to the central axis A of the outlet opening 108 is therefore 3.4. Here too, the ratio of the extent D to the length AL is approximately 0.55.

The imaging properties of the machining heads 200 and 300 in figures 4 and 5 correspond to the imaging properties of the machining head 100 in figures 3a and 3b.

Finally, it should be mentioned that the examples of the machining heads 100 to 300 in figures 3a to 5, in which the adaptive VRMs 21a and 21b are used instead of lenses that are displaceable parallel to the machining laser beam 104, have the further advantage that the focal position and the magnification of the machining laser beam 104 can be changed significantly more quickly. By changing the curvature and thus the radius of curvature of a VRM, the focal position and the magnification can be changed significantly more quickly than by displacing a transmissive optical element, such as a lens, parallel to the machining laser beam 104. A full stroke of a VRM, i.e. a change of the radius of curvature from -3 m to +3 m, takes less than 30 ms. This means that a change in magnification from 1.8 to 3.7 can be carried out within 30 ms. The focal position can also be changed from -20 mm to +60 mm within 30 ms. A machining head with lenses that are displaceable parallel to the machining laser beam, on the other hand, takes up to 8 to 10 times longer to make such changes.

In further variations of the above examples, additional VRMs can be provided as further stationary deformable mirrors between the VRMs 21a and 21b.In such variations including more than two VRMs, the portion of the optical path 30 between the VRMs 21a and 21b can be further shortened, and greater compactness of the machining head can be achieved. In these variations, the portion of the optical path 30 between adjacently arranged VRMs can have a length in the range of 150 mm to 450 mm, preferably 280 mm to 350 mm, in each case.

### List of reference signs

- 1: Laser machining head
- 2: Transport fibre
- 3a, 3b: Lens displacement mechanism
- 4: Laser beam
- 5a: Collimating lens
- 5b: Focusing lens
- 7: Machining location
- 8: Outlet opening
- 9: Protective glass
- 10: Laser machining device
- 12: Workpiece
- 17: Process monitoring unit
- 21a: Deformable mirror, VRM
- 21b: Deformable mirror, VRM
- 25: Surface
- 26: Membrane
- 27: Fluid space
- 28: Actuator
- 29: Control unit
- 30: Optical path
- 100: Laser machining head
- 102: Housing
- 103: Optical system
- 104: Machining laser beam
- 104a: Focus
- 105a: Collimating lens
- 105b: Focusing lens
- 107: Interface
- 108: Outlet opening
- 109: Protective glass
- 110: Fibre end cap
- 111: Transport fibre
- 112: Deflection mirror
- 116: Region
- 116a: Region
- 116b: Region
- 116c: Region
- 120: Laser source
- 200: Laser machining head
- 230a: Sub-path
- 230b: Sub-path
- 230c: Sub-path
- 300: Laser machining head
- 330a: Sub-path
- 330b: Sub-path
- 330c: Sub-path

## Claims

1. A laser machining device for the laser machining of a workpiece (12), in particular for laser cutting, comprising a laser machining head (100; 200; 300) with
- a housing (102) that has an interface (107) for coupling a laser source for a machining laser beam (104) and an outlet opening (108) for the machining laser beam (104); and
- an optical system (103) for shaping the machining laser beam and guiding the machining laser beam on an optical path (30) having a total length between the interface (107) and the outlet opening (108);
wherein
the housing (102) encloses the optical system (103) and has a spatial extension (D) parallel to a central axis (A) of the outlet opening (108); and
the optical system (103) has a first stationary, deformable mirror (21a) and a second stationary, deformable mirror (21b), which are each arranged such that they each deflect the machining laser beam at an angle (α1, α2);
**characterized in that**
the ratio of the overall length of the optical path (30) between the outlet opening (108) and the interface (107) for coupling the laser source to the spatial extension (D) of the housing (102) parallel to the central axis (A) of the outlet opening (108) is in the range of 2 to 4.5.

2. The device according to claim 1,
wherein the overall length of the optical path (30) is in the range of 1000 mm to 2500 mm, preferably 1400 mm to 1900 mm; and/or
wherein the spatial extension (D) of the housing (102) parallel to the central axis (A) of the outlet opening (108) is in the range of 300 mm to 700 mm, preferably 400 mm to 600 mm; and/or
wherein a radius of curvature of the first mirror (21a) and/or a radius of curvature of the second mirror (21b) is in the range of -1.5 m to +1.5 m; and/or
wherein the portion of the optical path (30) between the first deformable mirror and the second deformable mirror has a length (AL) of at least 300 mm, preferably in the range of 700 mm to 1100 mm; and/or
wherein the angle (α1, α2) is an acute angle in the range of 5.5° to 12.5°.

3. The device according to any one of the preceding claims,
wherein the ratio of the spatial extension (D) of the housing (102) parallel to the central axis (A) of the outlet opening (108) to the length (AL) of the portion of the optical path (30) between the first and second deformable mirrors (21a, 21b) is in the range of 0.33 to 0.9.

4. The device according to any one of the preceding claims,
wherein the first and second deformable mirrors (21a, 21b), in particular actuators (28) of the first deformable mirror and of the second deformable mirror, are designed to be controllable individually and/or in manner coordinated with one another in order to adjust the radius of curvature; and/or
wherein the first and/or the second deformable mirror (21a, 21b) is/are deformable such that at least one element selected from the divergence of the machining laser beam and the diameter of the machining laser beam is changed.

5. The device according to any one of the preceding claims,
wherein at least one element selected from the optical system (103) and a control unit (29) of the laser machining head is designed such that by adjusting at least one of the radii of curvature of the first deformable mirror and of the second deformable mirror, in particular exclusively by adjusting at least one of the radii of curvature of the first deformable mirror and of the second deformable mirror, a focal position of the machining laser beam and a magnification of the optical system (103) are modified; and/or
wherein at least one element selected from the optical system (103) and the control unit (29) is designed such that a change in the curvature of the first and/or the second mirror (21a, 21b) takes place at at least 2.3 (m s)⁻¹.

6. The device according to any one of the preceding claims,
wherein at least one element selected from the optical system (103) and the control unit (29) is designed such that the focal position of the machining laser beam at the machining location (7) is adjustable in a range of -90 mm to +110 mm, preferably -40 mm to +40 mm, and/or the magnification of the optical system is adjustable in a range of 1.4 to 4.8, preferably 1.7 to 3.8.

7. The device according to any one of the preceding claims,
wherein the optical system (103) contains exclusively optical elements, which are each stationary, in particular in the propagation direction of the machining laser beam; and/or
wherein the optical system (103) contains one or more further optical elements selected from a mirror, an adaptive mirror, a deflection mirror (112), a lens (105a, 105b) and a fibre end cap, each of which is stationary; and/or
wherein at least one optical element selected from at least one stationary planar mirror, at least one stationary adaptive mirror and at least one further stationary, deformable mirror is provided between the first and second mirrors (21a, 21b); and/or
wherein the portion of the optical path (30) between the at least one further deformable mirror and at least one adjacently arranged mirror selected from the first deformable mirror, the second deformable mirror and another of the further deformable mirrors has a length in the range of 150 mm to 450 mm in each case.

8. The device according to any one of the preceding claims,
wherein by providing at least one stationary optical element between the first and the second mirror (21a, 21b), the optical path (30) between the first and the second mirror is divided into optical sub-paths (230a, 230b, 230c; 330a, 330b, 330c).

9. The device according to any one of the preceding claims,
wherein a laser source (120) for the machining laser beam is coupled to the interface (107); and/or
wherein the housing (102) has further interfaces (106) for coupling further components, in particular a camera for process monitoring and/or a light source for an illuminating light.

10. A laser machining method for the laser machining of a workpiece (12), in particular for laser cutting, the laser machining method being **characterized by**:
using the laser machining device according to any one of the preceding claims,
and further by the following steps:
generating a machining laser beam (104) with a laser source (120) coupled to the interface (107) of the housing (102) of the laser machining head (100; 200; 300);
shaping the machining laser beam (104) and guiding the machining laser beam with the optical system (103) on the optical path (30) with an overall length between the interface (107) and the outlet opening (108) of the laser machining head;
adjusting at least one of the radii of curvature of the first stationary, deformable mirror (21a) and the second stationary, deformable mirror (21b);
deflecting the machining laser beam (104) at an angle (α1, α2) at each of the first deformable mirror and the second deformable mirror; and
machining the workpiece (12) with the machining laser beam (104).

11. The laser machining method according to claim 10,
wherein the ratio of the overall length of the optical path to the spatial extension (D) of the housing (102) parallel to the central axis (A) of the outlet opening (108) is in the range of 2 to 4.5, preferably 2.5 to 4; and/or
wherein the portion of the optical path (30) between the first deformable mirror and the second deformable mirror has a length (AL) of at least 300 mm, preferably in the range of 700 to 1100 mm; and/or
wherein an acute angle in the range of 5.5° to 12.5°, preferably 7.5° to 10.5°, is selected or preconfigured as the angle (α1, α2).

12. The laser machining method according to claim 10 or 11,
wherein the first and second mirrors (21a, 21b), in particular actuators (28) of the first mirror and the second mirror, are controlled individually and/or in a manner coordinated with one another, in particular with the control unit (29), in order to adjust the radius of curvature; and/or
wherein the first deformable mirror and/or the second deformable mirror is/are deformed such that at least one element selected from the divergence of the machining laser beam and the diameter of the machining laser beam is changed.

13. The laser machining method according to any one of claims 10 to 12,
wherein by adjusting at least one of the radii of curvature of the first and second deformable mirrors (21a, 21b), in particular exclusively by adjusting at least one of the radii of curvature of the first deformable and the second deformable mirror, a focal position of the machining laser beam (104) and a magnification of the optical system (103) are modified; and/or
wherein a change in the respective curvatures of the first and/or the second mirror (21a, 21b) occurs at at least 2.3 (ms)⁻¹.

14. The laser machining method according to any one of claims 10 to 13,
wherein the focal position of the machining laser beam (104) is adjusted in a range of - 90 mm to +110 mm, preferably -40 mm to +40 mm, and/or the magnification of the optical system (103) is adjusted in a range of 1.4 to 4.8, preferably 1.7 to 3.8.

## Patentansprüche

1. Laserbearbeitungsvorrichtung zum Laserbearbeiten eines Werkstücks (12), insbesondere zum Laserschneiden, umfassend einen Laserbearbeitungskopf (100; 200; 300) mit
- einem Gehäuse (102), das eine Schnittstelle (107) zum Einkoppeln einer Laserquelle für einen Bearbeitungslaserstrahl (104) und eine Austrittsöffnung (108) für den Bearbeitungslaserstrahl (104) aufweist; und
- einem optischen System (103) zum Formen des Bearbeitungslaserstrahls und zum Führen des Bearbeitungslaserstrahls auf einem optischen Pfad (30) mit einer Gesamtlänge zwischen der Schnittstelle (107) und der Austrittsöffnung (108);
wobei
das Gehäuse (102) das optische System (103) umschließt und eine räumliche Ausdehnung (D) parallel zu einer Mittelachse (A) der Austrittsöffnung (108) aufweist; und
das optische System (103) einen ersten stationären, verformbaren Spiegel (21a) und einen zweiten stationären, verformbaren Spiegel (21b) aufweist, die jeweils so angeordnet sind, dass sie den Bearbeitungslaserstrahl jeweils unter einem Winkel (α1, α2) ablenken;
**dadurch gekennzeichnet, dass**
das Verhältnis der Gesamtlänge des optischen Pfads (30) zwischen der Austrittsöffnung (108) und der Schnittstelle (107) zum Einkoppeln der Laserquelle zu der räumlichen Ausdehnung (D) des Gehäuses (102) parallel zur Mittelachse (A) der Austrittsöffnung (108) im Bereich von 2 bis 4,5 liegt.

2. Vorrichtung nach Anspruch 1,
wobei die Gesamtlänge des optischen Pfads (30) im Bereich von 1000 mm bis 2500 mm, vorzugsweise 1400 mm bis 1900 mm liegt; und/oder
wobei die räumliche Ausdehnung (D) des Gehäuses (102) parallel zur Mittelachse (A) der Austrittsöffnung (108) im Bereich von 300 mm bis 700 mm, vorzugsweise 400 mm bis 600 mm, liegt; und/oder
wobei ein Krümmungsradius des ersten Spiegels (21a) und/oder ein Krümmungsradius des zweiten Spiegels (21b) im Bereich von -1,5 m bis +1,5 m liegt; und/oder
wobei der Abschnitt des optischen Pfads (30) zwischen dem ersten verformbaren Spiegel und dem zweiten verformbaren Spiegel eine Länge (AL) von mindestens 300 mm aufweist, vorzugsweise im Bereich von 700 mm bis 1100 mm; und/oder
wobei der Winkel (α1, α2) ein spitzer Winkel im Bereich von 5,5° bis 12,5° ist.

3. Vorrichtung nach einem der vorhergehenden Ansprüche,
wobei das Verhältnis der räumlichen Ausdehnung (D) des Gehäuses (102) parallel zur Mittelachse (A) der Austrittsöffnung (108) zur Länge (AL) des Abschnitts des optischen Pfads (30) zwischen dem ersten und zweiten verformbaren Spiegel (21a, 21b) im Bereich von 0,33 bis 0,9 liegt.

4. Vorrichtung nach einem der vorhergehenden Ansprüche,
wobei der erste und zweite verformbare Spiegel (21a, 21b), insbesondere Aktuatoren (28) des ersten verformbaren Spiegels und des zweiten verformbaren Spiegels, dazu ausgebildet sind, einzeln und/oder in miteinander koordinierter Weise steuerbar zu sein, um den Krümmungsradius einzustellen; und/oder
wobei der erste und/oder der zweite verformbare Spiegel (21a, 21b) derart verformbar ist/sind, dass mindestens ein Element, ausgewählt aus der Divergenz des Bearbeitungslaserstrahls und dem Durchmesser des Bearbeitungslaserstrahls, geändert wird.

5. Vorrichtung nach einem der vorhergehenden Ansprüche,
wobei mindestens ein Element, ausgewählt aus dem optischen System (103) und einer Steuereinheit (29) des Laserbearbeitungskopfs, derart ausgebildet ist, dass durch Einstellen mindestens eines der Krümmungsradien des ersten verformbaren Spiegels und des zweiten verformbaren Spiegels, insbesondere ausschließlich durch Einstellen mindestens eines der Krümmungsradien des ersten verformbaren Spiegels und des zweiten verformbaren Spiegels, eine Fokuslage des Bearbeitungslaserstrahls und eine Vergrößerung des optischen Systems (103) modifiziert werden; und/oder
wobei mindestens ein Element, ausgewählt aus dem optischen System (103) und der Steuereinheit (29), derart ausgebildet ist, dass eine Änderung der Krümmung des ersten und/oder des zweiten Spiegels (21a, 21b) mit mindestens 2,3 (m s)⁻¹ erfolgt.

6. Vorrichtung nach einem der vorhergehenden Ansprüche,
wobei mindestens ein Element, ausgewählt aus dem optischen System (103) und der Steuereinheit (29), derart ausgebildet ist, dass die Fokuslage des Bearbeitungslaserstrahls am Bearbeitungsort (7) in einem Bereich von -90 mm bis +110 mm, vorzugsweise -40 mm bis +40 mm, einstellbar ist, und/oder die Vergrößerung des optischen Systems in einem Bereich von 1,4 bis 4,8, vorzugsweise 1,7 bis 3,8, einstellbar ist.

7. Vorrichtung nach einem der vorhergehenden Ansprüche,
wobei das optische System (103) ausschließlich optische Elemente enthält, die jeweils stationär sind, insbesondere in der Ausbreitungsrichtung des Bearbeitungslaserstrahls; und/oder
wobei das optische System (103) ein oder mehrere weitere optische Elemente, ausgewählt aus einem Spiegel, einem adaptiven Spiegel, einem Umlenkspiegel (112), einer Linse (105a, 105b) und einer Faserendkappe, enthält, die jeweils stationär sind; und/oder
wobei mindestens ein optisches Element, ausgewählt aus mindestens einem stationären Planspiegel, mindestens einem stationären adaptiven Spiegel und mindestens einem weiteren stationären, verformbaren Spiegel, zwischen dem ersten und zweiten Spiegel (21a, 21b) vorgesehen ist; und/oder
wobei der Abschnitt des optischen Pfads (30) zwischen dem mindestens einen weiteren verformbaren Spiegel und mindestens einem benachbart angeordneten Spiegel, ausgewählt aus dem ersten verformbaren Spiegel, dem zweiten verformbaren Spiegel und einem anderen der weiteren verformbaren Spiegel, eine Länge im Bereich von jeweils 150 mm bis 450 mm aufweist.

8. Vorrichtung nach einem der vorhergehenden Ansprüche,
wobei durch Bereitstellen mindestens eines stationären optischen Elements zwischen dem ersten und dem zweiten Spiegel (21a, 21b) der optische Pfad (30) zwischen dem ersten und dem zweiten Spiegel in optische Teilpfade (230a, 230b, 230c; 330a, 330b, 330c) unterteilt ist.

9. Vorrichtung nach einem der vorhergehenden Ansprüche,
wobei eine Laserquelle (120) für den Bearbeitungslaserstrahl an die Schnittstelle (107) gekoppelt ist; und/oder
wobei das Gehäuse (102) weitere Schnittstellen (106) zum Einkoppeln weiterer Komponenten aufweist, insbesondere einer Kamera zur Prozessüberwachung und/oder einer Lichtquelle für ein Beleuchtungslicht.

10. Laserbearbeitungsverfahren für die Laserbearbeitung eines Werkstücks (12), insbesondere zum Laserschneiden, wobei das Laserbearbeitungsverfahren **gekennzeichnet ist durch**:
Verwenden der Laserbearbeitungsvorrichtung nach einem der vorhergehenden Ansprüche, und ferner **durch** die folgenden Schritte:
Erzeugen eines Bearbeitungslaserstrahls (104) mit einer Laserquelle (120), die an die Schnittstelle (107) des Gehäuses (102) des Laserbearbeitungskopfs (100; 200; 300) gekoppelt ist;
Formen des Bearbeitungslaserstrahls (104) und Führen des Bearbeitungslaserstrahls mit dem optischen System (103) auf dem optischen Pfad (30) mit einer Gesamtlänge zwischen der Schnittstelle (107) und der Austrittsöffnung (108) des Laserbearbeitungskopfs;
Einstellen mindestens eines der Krümmungsradien des ersten stationären, verformbaren Spiegels (21a) und des zweiten stationären, verformbaren Spiegels (21b);
Ablenken des Bearbeitungslaserstrahls (104) unter einem Winkel (α1, α2) an jedem des ersten verformbaren Spiegels und des zweiten verformbaren Spiegels; und
Bearbeiten des Werkstücks (12) mit dem Bearbeitungslaserstrahl (104).

11. Laserbearbeitungsverfahren nach Anspruch 10,
wobei das Verhältnis der Gesamtlänge des optischen Pfads zu der räumlichen Ausdehnung (D) des Gehäuses (102) parallel zur Mittelachse (A) der Austrittsöffnung (108) im Bereich von 2 bis 4,5, vorzugsweise 2,5 bis 4, liegt; und/oder
wobei der Abschnitt des optischen Pfads (30) zwischen dem ersten verformbaren Spiegel und dem zweiten verformbaren Spiegel eine Länge (AL) von mindestens 300 mm aufweist, vorzugsweise im Bereich von 700 bis 1100 mm; und/oder
wobei ein spitzer Winkel im Bereich von 5,5° bis 12,5°, vorzugsweise 7,5° bis 10,5°, als der Winkel (α1, α2) ausgewählt oder vorkonfiguriert wird.

12. Laserbearbeitungsverfahren nach Anspruch 10 oder 11,
wobei der erste und zweite Spiegel (21a, 21b), insbesondere Aktuatoren (28) des ersten Spiegels und des zweiten Spiegels, einzeln und/oder in einer miteinander koordinierten Weise, insbesondere mit der Steuereinheit (29), gesteuert werden, um den Krümmungsradius einzustellen; und/oder
wobei der erste verformbare Spiegel und/oder der zweite verformbare Spiegel derart verformt wird/werden, dass mindestens ein Element, ausgewählt aus der Divergenz des Bearbeitungslaserstrahls und dem Durchmesser des Bearbeitungslaserstrahls, geändert wird.

13. Laserbearbeitungsverfahren nach einem der Ansprüche 10 bis 12,
wobei durch Einstellen mindestens eines der Krümmungsradien des ersten und zweiten verformbaren Spiegels (21a, 21b), insbesondere ausschließlich durch Einstellen mindestens eines der Krümmungsradien des ersten verformbaren und des zweiten verformbaren Spiegels, eine Fokuslage des Bearbeitungslaserstrahls (104) und eine Vergrößerung des optischen Systems (103) modifiziert werden; und/oder
wobei eine Änderung der jeweiligen Krümmungen des ersten und/oder des zweiten Spiegels (21a, 21b) mit mindestens 2,3 (ms)⁻¹ erfolgt.

14. Laserbearbeitungsverfahren nach einem der Ansprüche 10 bis 13,
wobei die Fokuslage des Bearbeitungslaserstrahls (104) in einem Bereich von -90 mm bis +110 mm, vorzugsweise -40 mm bis +40 mm eingestellt wird, und/oder die Vergrößerung des optischen Systems (103) in einem Bereich von 1,4 bis 4,8, vorzugsweise 1,7 bis 3,8, eingestellt wird.

## Revendications

1. Dispositif d'usinage au laser pour l'usinage au laser d'une pièce (12), notamment pour la découpe au laser, comprenant une tête d'usinage au laser (100 ; 200 ; 300) avec
- un boîtier (102) qui possède une interface (107) destinée au couplage d'une source laser pour un faisceau laser d'usinage (104) et une ouverture de sortie (108) destinée au faisceau laser d'usinage (104) ; et
- un système optique (103) destiné à mettre en forme le faisceau laser d'usinage et à guider le faisceau laser d'usinage sur un trajet optique (30) ayant une longueur totale entre l'interface (107) et l'ouverture de sortie (108) ;
dans lequel
le boîtier (102) renferme le système optique (103) et présente une extension spatiale (D) parallèle à un axe central (A) de l'ouverture de sortie (108) ; et
le système optique (103) comporte un premier miroir déformable fixe (21a) et un second miroir déformable fixe (21b), qui sont chacun agencés de telle sorte qu'ils dévient chacun le faisceau laser d'usinage à un angle (α1, α2) ;
**caractérisé en ce que**
le rapport entre la longueur totale du trajet optique (30) entre l'ouverture de sortie (108) et l'interface (107) destinée au couplage de la source laser et l'extension spatiale (D) du boîtier (102) parallèle à l'axe central (A) de l'ouverture de sortie (108) est compris entre 2 et 4,5.

2. Dispositif selon la revendication 1,
dans lequel la longueur totale du trajet optique (30) est comprise entre 1 000 mm et 2 500 mm, de préférence entre 1 400 mm et 1 900 mm ; et/ou
dans lequel l'extension spatiale (D) du boîtier (102) parallèle à l'axe central (A) de l'ouverture de sortie (108) est comprise entre 300 mm et 700 mm, de préférence entre 400 mm et 600 mm ; et/ou
dans lequel un rayon de courbure du premier miroir (21a) et/ou un rayon de courbure du second miroir (21b) est compris entre -1,5 m et +1,5 m ; et/ou
dans lequel la portion du trajet optique (30) entre le premier miroir déformable et le second miroir déformable présente une longueur (AL) d'au moins 300 mm, de préférence comprise entre 700 mm et 1 100 mm ; et/ou
dans lequel l'angle (α1, α2) est un angle aigu compris entre 5,5° et 12,5°.

3. Dispositif selon l'une quelconque des revendications précédentes,
dans lequel le rapport entre l'extension spatiale (D) du boîtier (102) parallèle à l'axe central (A) de l'ouverture de sortie (108) et la longueur (AL) de la portion du trajet optique (30) entre le premier et le second miroir déformable (21a, 21b) est compris entre 0,33 et 0,9.

4. Dispositif selon l'une quelconque des revendications précédentes,
dans lequel les premier et second miroirs déformables (21a, 21b), et notamment les actionneurs (28) du premier et du second miroirs déformables, sont conçus pour être commandés individuellement et/ou de manière coordonnée afin d'ajuster le rayon de courbure ; et/ou
dans lequel le premier et/ou le second miroirs déformables (21a, 21b) sont déformables de sorte qu'au moins un élément choisi parmi la divergence du faisceau laser d'usinage et le diamètre du faisceau laser d'usinage soit modifié.

5. Dispositif selon l'une quelconque des revendications précédentes,
dans lequel au moins un élément choisi parmi le système optique (103) et une unité de commande (29) de la tête d'usinage au laser est conçu de sorte que, en ajustant au moins l'un des rayons de courbure du premier miroir déformable et du second miroir déformable, et en particulier exclusivement en ajustant au moins l'un des rayons de courbure du premier miroir déformable et du second miroir déformable, une position focale du faisceau laser d'usinage et un grossissement du système optique (103) soient modifiés ; et/ou
dans lequel au moins un élément choisi parmi le système optique (103) et l'unité de commande (29) est conçu de sorte qu'un changement de courbure du premier et/ou du second miroir (21a, 21b) se produise à au moins 2,3 (ms)⁻¹.

6. Dispositif selon l'une quelconque des revendications précédentes,
dans lequel au moins un élément choisi parmi le système optique (103) et l'unité de commande (29) est conçu de sorte que la position focale du faisceau laser d'usinage à l'emplacement d'usinage (7) soit réglable entre -90 mm et +110 mm, de préférence entre -40 mm et +40 mm, et/ou que le grossissement du système optique soit réglable entre 1,4 et 4,8, de préférence entre 1,7 et 3,8.

7. Dispositif selon l'une quelconque des revendications précédentes,
dans lequel le système optique (103) contient exclusivement des éléments optiques, qui sont chacun fixes, notamment dans la direction de propagation du faisceau laser d'usinage ; et/ou
dans lequel le système optique (103) contient un ou plusieurs autres éléments optiques choisis parmi un miroir, un miroir adaptatif, un miroir de déflexion (112), une lentille (105a, 105b) et un embout de fibre, chacun étant fixe ; et/ou
dans lequel au moins un élément optique choisi parmi au moins un miroir plan fixe, au moins un miroir adaptatif fixe et au moins un autre miroir déformable fixe est prévu entre les premier et second miroirs (21a, 21b) ; et/ou
dans lequel la portion du trajet optique (30) entre l'au moins un autre miroir déformable et au moins un miroir agencé de manière adjacente choisi parmi le premier miroir déformable, le second miroir déformable et un autre des autres miroirs déformables présente une longueur comprise entre 150 mm et 450 mm dans chaque cas.

8. Dispositif selon l'une quelconque des revendications précédentes,
dans lequel, en prévoyant au moins un élément optique fixe entre le premier et le second miroir (21a, 21b), le trajet optique (30) entre le premier et le second miroir est divisé en sous-trajets optiques (230a, 230b, 230c ; 330a, 330b, 330c).

9. Dispositif selon l'une quelconque des revendications précédentes,
dans lequel une source laser (120) destinée au faisceau laser d'usinage est couplée à l'interface (107) ; et/ou
dans lequel le boîtier (102) comporte d'autres interfaces (106) destinées au couplage d'autres composants, notamment une caméra pour la surveillance des processus et/ou une source lumineuse pour une lumière d'éclairage.

10. Procédé d'usinage au laser destiné à l'usinage au laser d'une pièce (12), notamment à la découpe au laser, le procédé d'usinage au laser étant **caractérisé par** :
l'utilisation du dispositif d'usinage au laser selon l'une quelconque des revendications précédentes et, en outre, les étapes suivantes :
la génération d'un faisceau laser d'usinage (104) avec une source laser (120) couplée à l'interface (107) du boîtier (102) de la tête d'usinage au laser (100 ; 200 ; 300) ;
la mise en forme du faisceau laser d'usinage (104) et le guidage du faisceau laser d'usinage avec le système optique (103) sur le trajet optique (30) avec une longueur totale entre l'interface (107) et l'ouverture de sortie (108) de la tête d'usinage au laser ;
l'ajustement d'au moins l'un des rayons de courbure du premier miroir fixe déformable (21a) et du second miroir fixe déformable (21b) ;
la déviation du faisceau laser d'usinage (104) à un certain angle (α1, α2) au niveau du premier miroir déformable et du second miroir déformable ; et
l'usinage de la pièce (12) avec le faisceau laser d'usinage (104).

11. Procédé d'usinage au laser selon la revendication 10,
dans lequel le rapport entre la longueur totale du trajet optique et l'extension spatiale (D) du boîtier (102) parallèle à l'axe central (A) de l'ouverture de sortie (108) est compris entre 2 et 4,5, de préférence entre 2,5 et 4 ; et/ou
dans lequel la portion du trajet optique (30) entre le premier miroir déformable et le second miroir déformable présente une longueur (AL) d'au moins 300 mm, de préférence comprise entre 700 mm et 1 100 mm ; et/ou
dans lequel un angle aigu compris entre 5,5° et 12,5°, de préférence entre 7,5° et 10,5°, est choisi ou préconfiguré en tant qu'angle (α1, α2).

12. Procédé d'usinage selon la revendication 10 ou 11,
dans lequel les premier et second miroirs (21a, 21b), et notamment les actionneurs (28) du premier et du second miroir, sont commandés individuellement et/ou de manière coordonnée entre eux, notamment avec l'unité de commande (29), afin d'ajuster le rayon de courbure ; et/ou
dans lequel le premier miroir déformable et/ou le second miroir déformable sont déformés de sorte qu'au moins un élément choisi parmi la divergence du faisceau laser d'usinage et le diamètre du faisceau laser d'usinage soit changé.

13. Procédé d'usinage au laser selon l'une quelconque des revendications 10 à 12,
dans lequel, en ajustant au moins l'un des rayons de courbure des premier et second miroirs déformables (21a, 21b), et en particulier exclusivement en ajustant au moins l'un des rayons de courbure du premier et du second miroir déformable, une position focale du faisceau laser d'usinage (104) et un grossissement du système optique (103) sont modifiés ; et/ou
dans lequel un changement des courbures respectives du premier et/ou du second miroir (21a, 21b) se produit à au moins 2,3 (ms)⁻¹.

14. Procédé d'usinage au laser selon l'une quelconque des revendications 10 à 13,
dans lequel la position focale du faisceau laser d'usinage (104) est ajustée dans une plage de -90 mm à +110 mm, de préférence de -40 mm à +40 mm, et/ou le grossissement du système optique (103) est ajusté entre 1,4 et 4,8, de préférence entre 1,7 et 3,8.
